# EUROPÄISCHE PATENTSCHRIFT

(11) **EP 1 873 506 B1**
(45) Veröffentlichungstag und Bekanntmachung des Hinweises auf die Patenterteilung: **14.04.2010**
(21) Anmeldenummer: 07009263.0
(22) Anmeldetag: 08.05.2007
(51) Int. Cl.: G01K 1/14, G01K 13/00

(54) **Temperaturmessanordnung**
Temperature sensor
Capteur de température

(30) Priorität: 29.06.2006 DE 102006029935
(43) Veröffentlichungstag der Anmeldung: 02.01.2008
(73) Patentinhaber: Wurm GmbH & Co. KG Elektronische Systeme, 42857 Remscheid (DE)
(72) Erfinder: Wurm, Horst Peter, 42857 Remscheid (DE); Dreisbach, Heiko, 42111 Wupertal (DE)
(74) Vertreter: Manitz, Finsterwald & Partner GbR

(56) Entgegenhaltungen:
- GB-A- 2 240 846
- JP-A- 11 201 828
- US-A1- 2004 159 714

## Beschreibung

Die Erfindung betrifft eine Temperaturmessanordnung für Verkaufskühlmöbel für die Normalkühlung oder Tiefkühlung in Supermärkten oder dergleichen, bei denen die gekühlte Ware zur Entnahme ausliegt (z.B. als Bedientheke oder zur Selbstbedienung). Speziell in der Ausführung als ein Kühlregal ist das Kühlmöbel an der Vorderseite geöffnet, wobei die gekühlte Ware auf Tablaren aufliegt. Gekühlte Luft wird von oberseitigen Luftaustrittsöffnungen entlang der offenen Vorderseite vorhangartig nach unten geführt. Hierbei ist es bekannt, im Bereich der unterseitigen Luftrückführung einen Temperatursensor vorzusehen. Die hierdurch ermittelte Temperatur wird als die wärmste im Kühlmöbel auftretende Temperatur zugrundegelegt, um bei Abweichung von einem vorbestimmten Sollwert eine entsprechende Nachregelung der Kühlleistung auszulösen.

Nachteilig an der bekannten Temperaturmessung bei derartigen Kühlmöbeln ist, dass nicht immer die erwünschte und in lebensmittelrechtlicher Hinsicht erforderliche Genauigkeit der Temperaturüberwachung gewährleistet ist, insbesondere unter Berücksichtigung des Umstands, dass die zu kühlenden Lebensmittel generell als verpackte Ware ausliegen, bei der die Verpackung eine Wärmeisolierung bildet.

Aus der GB-A-2240846 ist eine Temperaturmessanordnung mit den Merkmalen des Oberbegriffs des Anspruchs 1 bekannt.

Es ist eine Aufgabe der Erfindung, eine Temperaturmessanordnung zu schaffen, die eine genaue Bestimmung der Temperatur von verpackten Lebensmitteln ermöglicht, die in einem Kühlmöbel (insbesondere in einem Kühlregal) abgelegt sind, wobei der üblichen Ausgestaltung derartiger Kühlmöbel und der zu kühlenden Lebensmittel Rechnung getragen werden soll.

Diese Aufgabe wird durch eine Temperaturmessanordnung mit den Merkmalen des Anspruchs 1 gelöst.

Die Temperaturmessanordnung zeichnet sich dadurch aus, dass der Temperatursensor innerhalb eines Hohlraums einer geschlossenen Gehäuseeinheit angeordnet ist, die über ein Lichteintrittsfenster den Eintritt von Umgebungslicht ermöglicht. Der Gehäuseteil der Temperaturmessanordnung ist beispielsweise wannen- oder schalenartig ausgebildet, und er ist für das Umgebungslicht nicht transparent, sondern kann innenseitig im Wesentlichen lichtabsorbierend ausgebildet sein. Das zugeordnete Lichteintrittsfenster erstreckt sich zum Beispiel zumindest abschnittsweise an der Oberseite und optional auch an der Vorderseite und/oder an den Seitenwänden des Gehäuseteils (bezogen auf die Gebrauchslage der Einheit).

Der Erfindung liegt die Erkenntnis zugrunde, dass eine gravierende Verfälschung des Messergebnisses eintreten kann, wenn die Temperaturmessung lediglich Konvektions- und Wärmeleitungseffekte berücksichtigt, nicht jedoch den Einfluss des Umgebungslichts. Zu kühlende Lebensmittel werden nämlich üblicherweise als verpackte Ware ausgelegt, wobei meist eine transparente Umhüllung verwendet wird (z.B. Polyethylenfolie), insbesondere in Verbindung mit einem dunklen Gefäß (z.B. Wanne oder Schale). Beispielhaft sei eine sogenannte Container-Verpackung erwähnt, bei der eine geschäumte Wanne von dunkler Farbgebung mit einer transparenten Folie überzogen ist (z.B. für Fleisch oder Käse). Üblich sind beispeilsweise auch Beutelverpackungen für Brot, Salat, geriebenen Käse, etc. Die in derartigen Verpackungen befindliche Ware ist aufgrund des zwangsläufig vorhandenen Umgebungslichts einer Art Treibhauseffekt ausgesetzt, d.h. das Verpackungsmaterial ermöglicht zwar den Einfall von elektromagnetischer Strahlung eines bestimmten Spektralbereichs (z.B. sichtbares Licht, nahe Infrarotstrahlung und nahe Ultraviolettstrahlung), nicht jedoch im gleichen Umfang den Austritt von Wärmestrahlung (Infrarotstrahlung). Auch kann die durch Strahlungsabsorption im Innenraum der Verpackung erzeugte Wärme (Temperaturerhöhung) nicht durch Konvektion an die Umgebung abgegeben werden.

Die erfindungsgemäße Temperaturmessanordnung bildet nun eine derartige Lebensmittelverpackung mit einfachen und effektiven Mitteln nach. Somit wird der Treibhauseffekt simuliert, der bei einer in einem Kühlmöbel ausliegenden Lebensmittelverpackung auftreten kann. Wenn die Temperaturmessanordnung an entsprechender Position in dem Kühlmöbel angeordnet ist wie die zu kühlende Ware, deren Temperatur überwacht werden soll, so kann der Einfluss des einfallenden Umgebungslichts bei der Temperaturmessung berücksichtigt werden. Hierdurch ist also eine echte "Worst Case"-Messung möglich, durch die sichergestellt wird, dass die hygienetechnischen und lebensmittelrechtlichen Anforderungen stets zuverlässig eingehalten werden können.

Zumindest das genannte Gehäuse und der darin angeordnete Temperatursensor bilden eine bauliche Einheit. Die Temperaturmessanordnung kann auch eine Auswerteeinrichtung zur Auswertung der Signale des Temperatursensors aufweisen, die entweder in diese bauliche Einheit integriert ist oder von der eigentlichen Temperaturmesseinheit separat ausgebildet und mit dieser Einheit über elektrische Verbindungsleitungen oder drahtlos verbunden ist.

Während die erfindungsgemäße Temperaturmessanordnung sich für offene Verkaufskühlmöbel besonders gut eignet, ist auch die Verwendung bei geschlossenen Kühlmöbeln möglich, insbesondere wenn diese über eine im Innenraum angeordnete Beleuchtung verfügen, die eine Art Treibhauseffekt in der betreffenden Lebensmittelverpackung bewirken kann.

Die erfindungsgemäße Temperaturmessanordnung umfasst zusätzlich einen Lichtsensor, der vorzugsweise in dem Hohlraum angeordnet ist, in dem auch der Temperatursensor angeordnet ist. Durch einen derartigen Lichtsensor kann der Einfluss der die Temperaturmessanordnung beaufschlagenden Wärmestrahlung abgeschätzt werden, die im Wesentlichen von Lichtquellen in der Umgebung der Temperaturmessanordnung herrührt. Somit können die Signale des Temperatursensors und des Lichtsensors dazu genutzt werden, um mittels einer zugeordneten Auswerteeinrichtung einen zweiten Temperaturwert zu ermitteln, der hinsichtlich des Einflusses dieser Wärmestrahlung kompensiert ist. Der zweite Temperaturwert entspricht somit im Wesentlichen einem zu erwartenden Temperaturwert, den eine gleichartige Verpackung aufweist, die nicht von Licht- oder Wärmestrahlung beaufschlagt wird, beispielsweise wenn eine solche Verpackung in einem Kühlregal in zweiter Reihe gestapelt ist. Zu diesem Zweck werden die Signale des Lichtsensors erfasst und unter Berücksichtigung einer Umrechnungsfunktion - beispielsweise als Tabelle hinterlegt - mit den Signalen des Temperatursensors verrechnet. Die Umrechnungsfunktion kann hierfür empirisch ermittelt werden.

Da eine direkte Messung der Beleuchtungsstärke lediglich mit relativ teuren Bauteilen durchgeführt werden kann, wird vorzugsweise eine Solarzelle oder eine Fotodiode als Lichtsensor verwendet, da diese Bauelemente eine definierte Kennlinie der Spannung als Funktion der Beleuchtungsstärke aufweisen.

Eine derartige Temperaturmessanordnung mit Temperatursensor und Lichtsensor ermöglicht somit mittels eines einzigen Geräts die Bestimmung zweier Temperaturwerte, die charakteristisch für unterschiedliche Kühl- und Umgebungsbedingungen sind, denen Lebensmittelverpackungen in einem Kühlmöbel ausgesetzt sind.

Ein besonderer Vorteil einer derartigen Temperaturmessanordnung besteht darin, dass mittels des Lichtsensors auch störende Lichtquellen detektiert werden können, also Lichtquellen in der Umgebung des betreffenden Kühlmöbels, die aufgrund ihrer Wärmestrahlung den Kühlbetrieb des Kühlmöbels negativ beeinflussen. Falls in einem Kühlmöbel nämlich besondere Temperaturprobleme auftreten, kann durch Auswertung der Signale des Lichtsensors untersucht werden, ob diese nicht allein auf die Verwendung zu starker Lichtquellen zurückzuführen sind.

Bei der Verwendung einer Solarzelle als Lichtsensor ergibt sich zudem die Möglichkeit, diese zugleich zur Energiegewinnung - etwa für den Betrieb der Temperaturmessanordnung - zu verwenden.

Gemäß einer weiteren Ausführungsform ist das Gehäuse der Temperaturmessanordnung an seiner dem umschlossenen Hohlraum zugewandten Seite zumindest abschnittsweise lichtabsorbierend ausgebildet (sichtbares Licht, Infrarot und/oder Ultraviolett), um eine Erwärmung des umschlossenen Hohlraums aufgrund des einfallenden Umgebungslichts nachzubilden, wie sie bei einer Lebensmittelverpackung des erläuterten Typs auftreten kann. Beispielsweise kann das Gehäuse innenseitig mit einer dunklen Farbe oder einer sonstigen lichtabsorbierenden Beschichtung versehen sein. Alternativ kann auch die Verwendung eines dunklen Grundmaterials für das Gehäuse ausreichend sein. Ferner kann für die Innenseite des Gehäuses eine Materialbehandlung zur Erzeugung einer lichtabsorbierenden Wirkung vorgesehen sein, beispielsweise eine dunkle Eloxierung.

Es ist auch von Vorteil, wenn der Temperatursensor mit dem Gehäuseteil über eine wärmeisolierende Befestigungseinrichtung verbunden ist. Hierdurch wird eine Verfälschung des Messergebnisses durch Wärmeleiteffekte zwischen dem Gehäuse und dem Temperatursensor vermieden.

Ferner ist es bevorzugt, wenn das genannte Lichteintrittsfenster sich zumindest entlang eines Teils der Oberseite des Gehäuses erstreckt, wobei das Lichteintrittsfenster zusätzlich an der Vorderseite und/oder an wenigstens einer Seitenwand des Gehäuses vorgesehen sein kann.

Das Lichteintrittsfenster sollte zumindest für sichtbares Licht transparent sein, vorzugsweise auch für zumindest einen Teil des ultravioletten Spektralbereichs. Wichtig ist letztlich, dass das spektrale Transmissionsvermögen des Lichteintrittsfensters dem spektralen Transmissionsvermögen der Lebensmittelverpackungen entspricht, deren Temperaturverhalten simuliert werden soll.

Der Temperatursensor selbst muss nicht unbedingt von dem Umgebungslicht beaufschlagt werden. Allerdings ist bevorzugt, wenn der Temperatursensor innerhalb des genannten Hohlraums von dem Lichteintrittsfenster beabstandet angeordnet ist, so dass zwischen dem Sensor und dem Lichteintrittsfenster ein echter Hohlraum gebildet ist, der durch Einfall von Umgebungslicht einen Treibhauseffekt ermöglicht. Insbesondere soll der Temperatursensor hierbei an ein Gasvolumen oder Luftvolumen angrenzen, das in dem Hohlraum eingeschlossen ist, um einen Treibhauseffekt möglichst wirksam nachzubilden.

Besonders vorteilhaft ist es auch, wenn der Hohlraum, in dem der Temperatursensor angeordnet ist, im Wesentlichen luftdicht abgeschlossen ist, d.h. es sollten keine Luftzirkulationsöffnungen vorgesehen sein, die einen Wärmeaustausch mit der Umgebung durch Konvektion ermöglichen.

Insbesondere kann der genannte Hohlraum gasdicht abgeschlossen sein, wobei der Hohlraum mit einem Schutzgas gefüllt ist, wie es auch im Zusammenhang mit den Lebensmittelverpackungen üblicherweise verwendet wird, deren Temperaturverhalten nachempfunden werden soll.

Ferner kann die Temperaturmessanordnung, wie bereits erwähnt, eine Auswerteeinrichtung aufweisen, die zumindest mit dem Temperatursensor verbunden und zur Ausgabe zumindest eines Temperatursignals oder eines Warnsignals ausgebildet ist. Ein derartiges Warnsignal kann aufgrund eines Vergleichs des gemessenen Temperaturwerts mit einem vorbestimmten oder einstellbaren Schwellwert erzeugt werden.

Die Auswerteeinrichtung ist dazu ausgebildet, aufgrund des Signals des Temperatursensors und des Signals des Lichtsensors einen wärmestrahlungskompensierten Temperaturwert zu berechnen. Die Auswerteeinrichtung kann in diesem Fall derart ausgebildet sein, dass eine von mehreren vorbestimmten Umrechnungsfunktionen ausgewählt werden kann, die für die Berechnung des wärmestrahlungskompensierten Temperaturwerts verwendet wird, wobei die verschiedenen Umrechnungsfunktionen unterschiedliche Abstrahlcharakteristiken von verschiedenen Lichtquellen berücksichtigen. Unter Abstrahlcharakteristik ist in diesem Zusammenhang insbesondere eine Relation zwischen der Beleuchtungsstärke einer Lichtquelle und der von der Lichtquelle abgestrahlten Wärmestrahlung zu verstehen.

Die Temperaturmessanordnung kann außerdem zusätzlich einen Funksender zur Ausgabe zumindest eines Sensorsignals und/oder zumindest eines Temperatursignals oder Warnsignals aufweisen. In diesem Fall können die Signale also drahtlos an eine zugeordnete Empfangseinrichtung übermittelt werden, wodurch sich der konstruktive Aufwand für das Anbringen einer oder mehrerer Temperaturmessanordnungen in dem Kühlmöbel erheblich vereinfacht. Bei dieser Ausführungsform ist die Temperaturmessanordnung vorzugsweise zusätzlich mit einem Energiespeicher ausgestattet, um die Auswerteeinrichtung sowie den Funksender mit der benötigten elektrischen Energie zu versorgen. In Betracht kommen beispielsweise eine elektrische Batterie, ein Akkumulator oder ein Speicherkondensator. Die elektrische Energie kann beispielsweise auch durch eine als Lichtsensor verwendete Solarzelle bereitgestellt werden, wobei die Energie insbesondere in dem genannten Energiespeicher gepuffert wird.

Außerdem ist es möglich, dass die Temperaturmessanordnung außerhalb des Hohlraums, der den Temperatursensor beherbergt, einen zusätzlichen Referenztemperatursensor aufweist, der zu Vergleichszwecken einen Temperaturmesswert ohne Berücksichtigung eines eventuellen Treibhauseffekts ausgibt.

Die Erfindung eignet sich für die Verwendung einer Temperaturmessanordnung der erläuterten Art zur Bestimmung der effektiven Temperatur von in einem Verkaufskühlmöbel ausliegenden verpackten Lebensmitteln.

Die Erfindung wird nachfolgend lediglich beispielhaft unter Bezugnahme auf die Zeichnungen erläutert.
- Fig. 1a bis 1e: zeigen verschiedene Ausführungsformen einer Temperaturmessanordnung.
- Fig. 2a bis 2c: zeigen mögliche Ausgestaltungen des Gehäuses mit Lichteintrittsfenster.

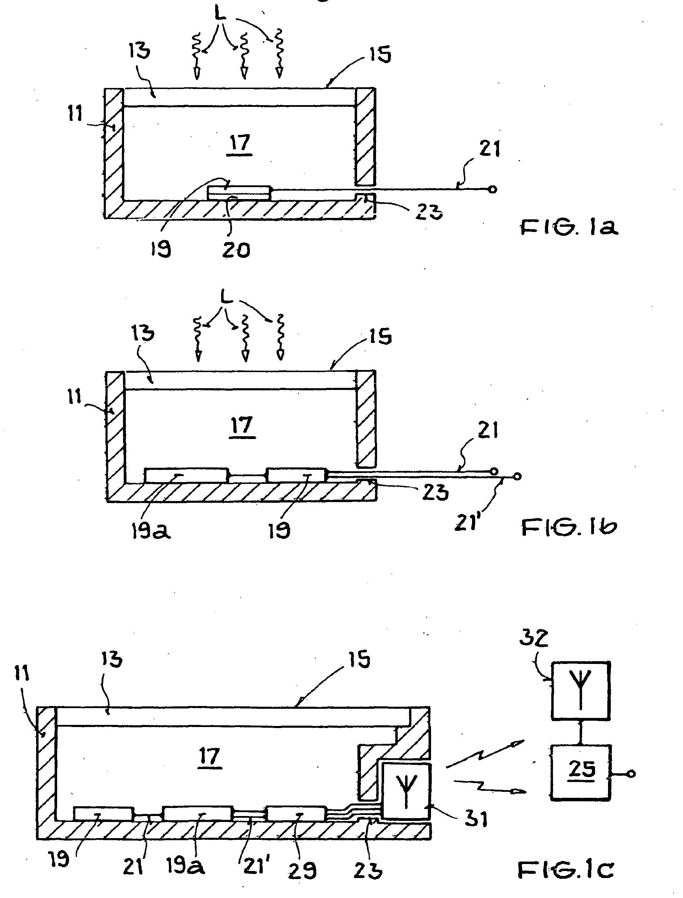

Fig. 1a zeigt ein erstes Ausführungsbeispiel einer Temperaturmesseinheit für Kühlmöbel. Diese besitzt ein wannenförmiges Gehäuse 11, das beispielsweise aus einem wärmeisolierenden, dunkel eingefärbten und somit strahlungsabsorbierenden Kunststoff gefertigt ist. Das Gehäuse 11 ist mittels eines Lichteintrittsfensters 13 abgeschlossen, das sich entlang der Oberseite 15 der gezeigten Temperaturmesseinheit erstreckt. Das Lichteintrittsfenster 13 besteht beispielsweise aus Glas oder einem transparenten Kunststoff. Das Gehäuse 11 und das Lichteintrittsfenster 13 umschließen einen Hohlraum 17, der beispielsweise mit Luft, Kohlendioxid oder einem Schutzgas befüllt ist.

In dem Hohlraum 17 ist ein Temperatursensor 19 angeordnet, beispielsweise am Boden des Gehäuses 11 oder hiervon mittels einer wärmeisolierenden Befestigungseinrichtung 20 getrennt. Die wärmeisolierende Befestigungseinrichtung 20 kann beispielsweise eine Drahtstruktur, eine Gitterstruktur oder eine Platte aus gespritztem oder geschäumtem Kunststoff aufweisen. Der Temperatursensor 19 misst die in dem Hohlraum 17 herrschende Temperatur und gibt über wenigstens ein beispielhaft eingezeichnetes Signalkabel 21, das durch einen abgedichteten Durchlass 23 das Gehäuse 11 verlässt, entsprechende Temperaturmesssignale aus. Bei dem Temperatursensor 19 kann es sich beispielsweise um einen elektrischen Widerstandstemperaturfühler handeln, beispielsweise um einen NTC-Temperaturfühler (negativer Temperaturkoeffizient) oder um einen PTC-Temperaturfühler (positiver Temperaturkoeffizient). Beispielsweise kommt auch ein Thermoelement in Betracht (Messung der Thermospannung zweier unterschiedlicher Metalle).

Die gezeigte Temperaturmesseinheit dient zur Bestimmung der Temperatur, die in einem Kühlmöbel für dort ausgelegte verpackte Ware innerhalb der Verpackung effektiv herrscht. Durch die Anordnung des Temperatursensors 19 innerhalb eines Hohlraums 17, der von einem lichtabsorbierenden Gehäuse 11 umgeben ist und über das Lichteintrittsfenster 13 von Umgebungslicht beaufschlagt wird, kann eine Art Treibhauseffekt nachempfunden werden, wie er für Lebensmittel zu beobachten ist, die in einer zumindest teilweise transparenten Verpackung angeboten werden. In Fig. 1a ist durch Pfeile L der Einfall von Umgebungslicht durch das Lichteintrittsfenster 13 in den Hohlraum 17 illustriert. Dieses einfallende Umgebungslicht beschränkt sich nicht auf den sichtbaren Spektralbereich, sondern umfasst insbesondere auch Ultraviolett-Anteile des elektromagnetischen Spektrums.

Vorzugsweise wird der Temperatursensor 19 - wie in Fig. 1a gezeigt - von dem durch das Lichteintrittsfenster 13 einfallenden Umgebungslicht direkt beaufschlagt.

Durch Anordnung der gezeigten Temperaturmesseinheit in ähnlicher Lage und Ausrichtung wie die Ware, deren Temperatur innerhalb eines Kühlmöbels nachempfunden werden soll (z.B. auf einem Tablar eines Kühlregals), kann auf einfache und wirksame Weise die trotz konvektiver Kühlung auftretende Erwärmung durch Umgebungslicht simuliert werden. Das am Signalkabel 21 ausgegebene Temperaturmesssignal wird dementsprechend dazu benutzt, bei Überschreiten eines vorbestimmten oder einstellbaren Schwellwerts ein entsprechendes Nachregeln der Kühlleistung des betreffenden Kühlmöbels zu veranlassen.

Die gezeigte Temperaturmesseinheit kann zu diesem Zweck über das Signalkabel 21 mit einer zugeordneten Auswerteeinrichtung verbunden sein (in Fig. 1a nicht gezeigt), die mit der gezeigten Einheit eine Temperaturmessanordnung bildet.

Fig. 1b zeigt eine erfindungsgemäße Ausführungsform einer Temperaturmessanordnung für Kühlmöbel. Zusätzlich zu dem Temperatursensor 19 ist in dem Hohlraum 17 ein Lichtsensor 19a angeordnet. Der Temperatursensor 19 und der Lichtsensor 19a sind über Signalkabel 21 bzw. 21' mit einer nicht gezeigten Auswerteeinrichtung verbunden. Durch den Lichtsensor 19a kann die Beleuchtungsstärke des die Temperaturmessanordnung beaufschlagenden Umgebungslichts - und damit indirekt die die Temperaturmessanordnung beaufschlagenden Wärmestrahlung - abgeschätzt und bei der Analyse der Temperaturverteilung im Inneren des Kühlmöbels berücksichtigt werden. Das Lichtsignal des Lichtsensors 19a ermöglicht es, anhand des Temperatursignals des Temperatursensors 19 einen zweiten Temperaturwert zu berechnen, der hinsichtlich der Wärmestrahlung des Umgebungslichts kompensiert ist. Durch eine einzige Messeinheit kann somit gleichzeitig die zu erwartende Temperatur einer von Umgebungslicht beaufschlagten Lebensmittelverpackung und die Temperatur einer abgeschatteten Lebensmittelverpackung ermittelt werden.

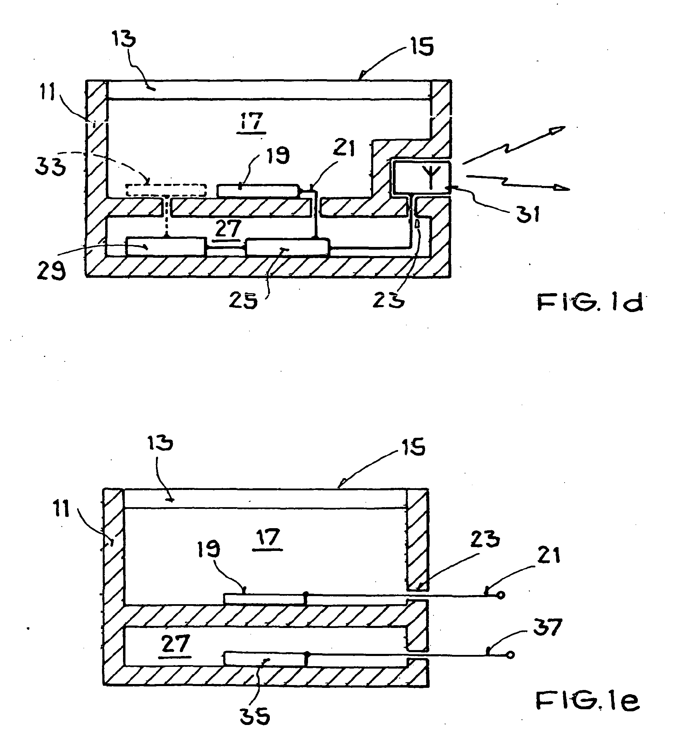

Wie nachstehend anhand von Fig. 1d noch beschrieben ist, kann die genannte Auswerteeinrichtung auch in die in Fig. 1b gezeigte Baueinheit integriert sein. Weiterhin kann vorgesehen sein, dass anstelle der gezeigten Kabelverbindungen die Signale der Sensoren 19, 19a mittels eines Funksenders an eine entfernt angeordnete Auswerte- und Steuereinrichtung übertragen werden.

Fig. 1c zeigt eine weitere erfindungsgemäße Ausführungsform einer Temperaturmessanordnung mit einer Messeinheit, die innerhalb eines Gehäuses 11 einen Temperatursensor 19, eine Solarzelle als Lichtsensor19a, einen elektrischen Akkumulator oder einen Speicherkondensator als Energiespeicher 29 und einen Funksender 31 aufweist. Der Temperatursensor 19 erzeugt ein Temperatursignal. Die Solarzelle 19a erzeugt ein Lichtsignal und dient zugleich zur Erzeugung von elektrischer Energie, die zur Energieversorgung des Funksenders 31 verwendet wird, wobei der Energiespeicher 29 als Puffer dient. Die Signale der beiden Sensoren 19, 19a werden über Signalleitungen 21, 21' an den Funksender 31 geleitet, der diese Signale als Funksignale aussendet.

Die Temperaturmessanordnung umfasst ferner eine Auswerteeinrichtung 25, die mittels eines angeschlossenen Funkempfängers 32 die Signale des Funksenders 31 empfängt. Die Auswerteeinrichtung 25 ist dazu ausgebildet, das somit empfangene Signal des Temperatursensors 19 anhand des Signals der Solarzelle 19a sowie anhand einer gespeicherten Umrechnungsfunktion in einen wärmestrahlungskompensierten Temperaturwert umzurechnen, so dass von der Auswerteeinrichtung 25 ein dem Temperatursignal des Temperatursensors 19 entsprechender erster Temperaturwert und ein zweiter, wärmestrahlungskompensierter Temperaturwert ausgegeben werden.

Fig. 1d zeigt ein weiteres Ausführungsbeispiel, bei dem das Ausgangssignal des Temperatursensors 19 einer Auswerteeinrichtung 25 zugeführt wird, die in dem hier gezeigten Ausführungsbeispiel in einem separaten Gehäuseraum 27 - und somit von dem Hohlraum 17 thermisch isoliert - angeordnet ist. Die Auswerteeinrichtung 25 wird von einem Energiespeicher 29 - beispielsweise einer elektrischen Batterie - mit der benötigten elektrischen Energie versorgt. Ausgangsseitig ist die Auswerteeinrichtung 25 mit einem Funksender 31 verbunden, der die von dem Temperatursensor 19 bereitgestellten Temperaturmesssignale drahtlos an eine zugeordnete Empfangseinrichtung (nicht gezeigt) übermittelt. Diese Ausgestaltung gestattet die flexible Anordnung der Temperaturmesseinheit als autonome Einheit in dem Kühlmöbel. Durch ständiges oder regelmäßiges Aussenden der Temperaturmesssignale können auch zeitliche Temperaturverläufe auf einfache Weise erfasst und zu Dokumentationszwecken aufgezeichnet werden. Zusätzlich zu den genannten Temperatursignalen können auch Identifikationssignale übermittelt werden, die eine Temperaturmesseinheit von anderen, benachbart angeordneten Temperaturmesseinheiten unterscheiden. Die Auswertung der Daten - gegebenenfalls von mehreren Temperaturmesseinheiten eines oder sogar mehrerer Kühlmöbel - kann somit in einer zentralen Auswerteeinrichtung erfolgen.

Gemäß einer optionalen Weiterbildung kann die Temperaturmesseinheit gemäß Fig. 1d innerhalb des Hohlraums 17 eine Solarzelle 33 besitzen, die das über das Lichteintrittsfenster 13 einfallende Licht in elektrische Energie umwandelt, die in dem Energiespeicher 29 aufgenommen wird. In diesem Fall ist der Energiespeicher 29 als elektrischer Akkumulator oder als Speicherkondensator ausgebildet. Somit entfällt die Notwendigkeit, die vorgenannte elektrische Batterie zu ersetzen, wenn deren Energiegehalt erschöpft ist. Die Solarzelle 33 kann außerdem gleichzeitig die Funktion des Lichtsensors 19a erfüllen, wie vorstehend bereits beschrieben wurde.

Fig. 1e zeigt ein weiteres Ausführungsbeispiel einer Temperaturmesseinheit für Kühlmöbel. Hier ist zusätzlich zu dem in dem Hohlraum 17 befindlichen, bereits erläuterten Temperatursensor 19 in einem Gehäuseraum 27 der von dem Hohlraum 17 thermisch isoliert ist, ein Referenztemperatursensor 35 angeordnet. Auch der Referenztemperatursensor 35 kann beispielsweise als Widerstandstemperaturfühler ausgebildet sein, wie im Zusammenhang mit dem Temperatursensor 19 erläutert. Der Referenztemperatursensor 35 erzeugt unabhängig von dem mittels des Temperatursensors 19 berücksichtigten Treibhauseffekt Referenztemperaturmesssignale, die beispielsweise mittels eines Signalkabels 37 ausgegeben werden. Die Temperaturmesssignale des Temperatursensors 19 und die Referenztemperaturmesssignale des Referenztemperatursensors 35 können somit gemeinsam ausgewertet werden, oder für die Regelung der Kühlleistung in dem betreffenden Kühlmöbel werden lediglich die Signale eines der beiden Sensoren 19, 35 berücksichtigt, je nachdem, welche Art von Lebensmitteln bzw. Verpackungen in dem Kühlmöbel angeordnet ist. Die Messsignale des Temperatursensors 19 und des Referenztemperatursensors 35 können im Übrigen auch per Funk über einen gemeinsamen Funksender ausgegeben werden, ähnlich wie in Fig. 1c und 1d gezeigt.

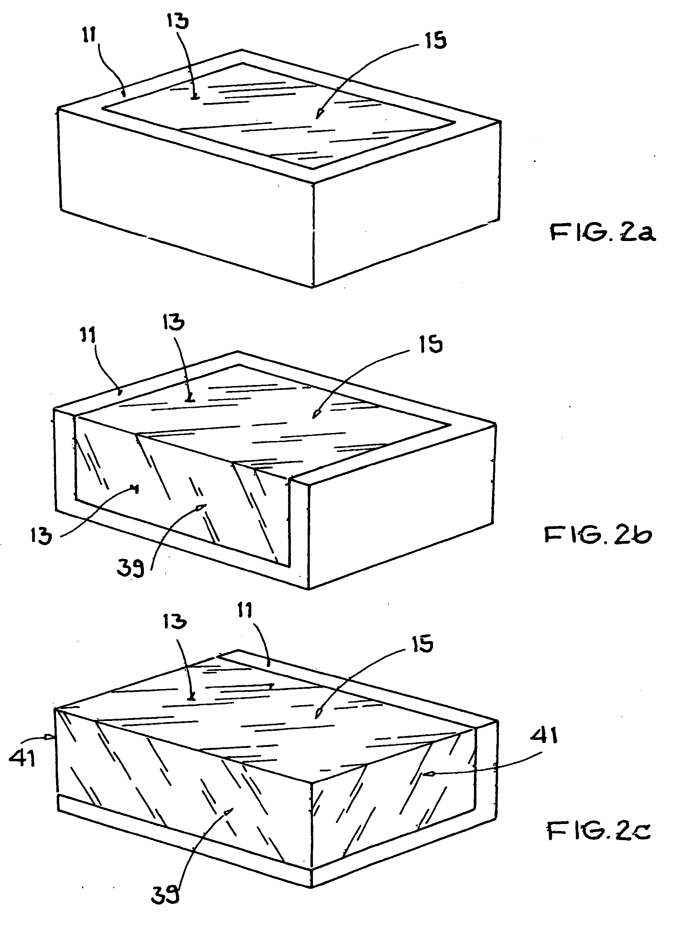

Fig. 2a zeigt eine mögliche Ausgestaltung des Gehäuses 11 und des Lichteintrittsfensters 13 einer Temperaturmesseinheit, wobei diese Ausgestaltung insbesondere jener gemäß Fig. 1a bis 1e entspricht. Das Lichteintrittsfenster 13 erstreckt sich hier entlang der Oberseite 15 der Einheit.

Alternativ hierzu kann sich das Lichteintrittsfenster 13 beispielsweise abschnittsweise entlang der Oberseite 15 und entlang der Vorderseite 39 der Temperaturmesseinheit erstrecken, wie dies in Fig. 2b gezeigt ist.

Fig. 2c zeigt eine mögliche Variante, bei der der das Lichteintrittsfenster 13 entlang der Oberseite 15, der Vorderseite 39 und zweier Seitenwände 41 der Temperaturmesseinheit verläuft.

Das Lichteintrittsfenster 13 kann beispielsweise auch kuppelartig ausgebildet sein, so dass das Gehäuse 11 im Wesentlichen lediglich den Boden der Temperaturmesseinheit bildet.

### Bezugszeichenliste

- 11: Gehäuse
- 13: Lichteintrittsfenster
- 15: Oberseite
- 17: Hohlraum
- 19: Temperatursensor
- 19a: Lichtsensor
- 20: wärmeisolierende Befestigungseinrichtung
- 21, 21': Signalkabel
- 23: Durchlass
- 25: Auswerteeinrichtung
- 27: Gehäuseraum
- 29: Energiespeicher
- 31: Funksender
- 32: Funkempfänger
- 33: Solarzelle
- 35: Referenztemperatursensor
- 37: Signalkabel
- 39: Vorderseite
- 41: Seitenwand

- L: Lichteintritt

## Patentansprüche

1. Temperaturmessanordnung für Kühlmöbel, mit einem Gehäuse (11), das mittels wenigstens eines Lichteintrittsfensters (13) abgeschlossen ist, wobei das Gehäuse und das Lichteintrittsfenster einen Hohlraum (17) begrenzen, in dem ein Temperatursensor (19) angeordnet ist,
**dadurch gekennzeichnet, dass**
die Temperaturmessanordnung zum Abschätzen des Einflusses der die Temperaturmessanordnung beaufschlagenden Wärmestrahlung ferner einen Lichtsensor (19a) umfasst,
wobei die Temperaturmessanordnung eine Auswerteeinrichtung (25) aufweist, die dazu ausgebildet ist, aufgrund eines Temperatursignals des Temperatursensors (19) und eines Lichtsignals des Lichtsensors (19a) einen wärmestrahlungskompensierten Temperaturwert zu berechnen.

2. Temperaturmessanordnung nach Anspruch 1,
**dadurch gekennzeichnet, dass**
der Lichtsensor (19a) in dem Hohlraum (17) angeordnet ist, in dem auch der Temperatursensor (19) angeordnet ist.

3. Temperaturmessanordnung nach Anspruch 2,
**dadurch gekennzeichnet, dass**
der Lichtsensor (19a) in dem Hohlraum (17) derart angeordnet ist, dass der Lichtsensor (19a) von Umgebungslicht beaufschlagt wird, das durch das Lichteintrittsfenster (13) in den Hohlraum (17) einfällt.

4. Temperaturmessanordnung nach einem der vorhergehenden Ansprüche,
**dadurch gekennzeichnet, dass**
der Lichtsensor (19a) eine Solarzelle oder Fotodiode ist.

5. Temperaturmessanordnung nach einem der vorhergehenden Ansprüche,
**dadurch gekennzeichnet, dass**
das Gehäuse (11) innenseitig lichtabsorbierend ausgebildet ist.

6. Temperaturmessanordnung nach einem der vorhergehenden Ansprüche,
**dadurch gekennzeichnet, dass**
das Lichteintrittsfenster (13) sich entlang der Oberseite (15) und/oder entlang der Vorderseite (39) und/oder entlang wenigstens einer Seitenwand (41) des Gehäuses (11) jeweils zumindest abschnittsweise erstreckt.

7. Temperaturmessanordnung nach einem der vorhergehenden Ansprüche,
**dadurch gekennzeichnet, dass**
das Lichteintrittsfenster (13) transparent für sichtbares Licht und ultraviolette Strahlung ist.

8. Temperaturmessanordnung nach einem der vorhergehenden Ansprüche,
**dadurch gekennzeichnet, dass**
der Temperatursensor (19) in dem Hohlraum (17) von dem Lichteintrittsfenster (13) beabstandet angeordnet ist.

9. Temperaturmessanordnung nach einem der vorhergehenden Ansprüche,
**dadurch gekennzeichnet, dass**
der Temperatursensor (19) in dem Hohlraum (17) derart angeordnet ist, dass der Temperatursensor (19) von Umgebungslicht beaufschlagt wird, das durch das Lichteintrittsfenster (13) in den Hohlraum (17) einfällt.

10. Temperaturmessanordnung nach einem der vorhergehenden Ansprüche,
**dadurch gekennzeichnet, dass**
der Temperatursensor (19) mit dem Gehäuse (11) über eine wärmeisolierende Befestigungseinrichtung (20) verbunden ist.

11. Temperaturmessanordnung nach einem der vorhergehenden Ansprüche,
**dadurch gekennzeichnet, dass**
der Hohlraum (17), in dem der Temperatursensor (19) angeordnet ist, im Wesentlichen luftdicht abgeschlossen ist.

12. Temperaturmessanordnung nach einem der vorhergehenden Ansprüche,
**dadurch gekennzeichnet, dass**
der Hohlraum (17), in dem der Temperatursensor (19) angeordnet ist, gasdicht abgeschlossen und mit einem Schutzgas befüllt ist.

13. Temperaturmessanordnung nach einem der vorhergehenden Ansprüche,
**dadurch gekennzeichnet, dass**
die Auswerteeinrichtung (25) zumindest mit dem Temperatursensor (19) verbunden ist und zur Ausgabe eines Temperatursignals oder eines Warnsignals ausgebildet ist.

14. Temperaturmessanordnung nach einem der vorhergehenden Ansprüche,
**dadurch gekennzeichnet, dass**
die Temperaturmessanordnung ferner einen Funksender (31) zur Ausgabe zumindest eines Sensorsignals und/oder eines Warnsignals aufweist.

15. Temperaturmessanordnung nach einem der vorhergehenden Ansprüche,
**dadurch gekennzeichnet, dass**
die Temperaturmessanordnung außerhalb des Hohlraums (17), in dem der Temperatursensor (19) angeordnet ist, zusätzlich einen Referenztemperatursensor (35) aufweist.

## Claims

1. A temperature measurement arrangement for refrigeration equipment, having a housing (11) which is closed by means of at least on light inlet window (13), wherein the housing and the light inlet window bound a hollow space (17) in which a temperature sensor (19) is arranged,
**characterised in that**
the temperature measurement arrangement furthermore includes a light sensor (19a) for the estimation of the influence of the thermal radiation acting on the temperature measurement arrangement, with the temperature measurement arrangement having an evaluation device (25) which is designed to calculate a temperature value compensated for thermal radiation on the basis of a temperature signal of the temperature sensor (19) and of a light signal of the light sensor (19a).

2. A temperature measurement arrangement in accordance with claim 1, **characterised in that** the light sensor (19a) is arranged in the hollow space (17) in which the temperature sensor (19) is also arranged.

3. A temperature measurement arrangement in accordance with claim 2, **characterised in that** the light sensor (19a) is arranged in the hollow space (17) such that the light sensor (19a) is acted on by environmental light which is incident into the hollow space (17) through the light inlet window (13).

4. A temperature measurement arrangement in accordance with any one of the preceding claims, **characterised in that** the light sensor (19a) is a solar cell or a photodiode.

5. A temperature measurement arrangement in accordance with any one of the preceding claims, **characterised in that** the housing (11) is designed as light absorbing at the inner side.

6. A temperature measurement arrangement in accordance with any one of the preceding claims, **characterised in that** the light inlet window (13) extends along the upper side (15) and/or along the front side (39) and/or along at least one side wall (41) of the housing (11) in each case at least regionally.

7. A temperature measurement arrangement in accordance with any one of the preceding claims, **characterised in that** the light inlet window (13) is transparent for visible light and for ultraviolet radiation.

8. A temperature measurement arrangement in accordance with any one of the preceding claims, **characterised in that** the temperature sensor (19) is arranged spaced apart from the light inlet window (13) in the hollow space (17).

9. A temperature measurement arrangement in accordance with any one of the preceding claims, **characterised in that** the temperature sensor (19) is arranged in the hollow space (17) such that the temperature sensor (19) is acted on by environmental light which is incident into the hollow space (17) through the light inlet window (13).

10. A temperature measurement arrangement in accordance with any one of the preceding claims, **characterised in that** the temperature sensor (19) is connected to the housing (11) via a thermally insulating fastening device (20).

11. A temperature measurement arrangement in accordance with any one of the preceding claims, **characterised in that** the hollow space (17) in which the temperature sensor (19) is arranged is closed in a substantially air-tight manner.

12. A temperature measurement arrangement in accordance with any one of the preceding claims, **characterised in that** the hollow space (17) in which the temperature sensor (19) is arranged is closed in a gas-tight manner and is filled with a protective gas.

13. A temperature measurement arrangement in accordance with any one of the preceding claims, **characterised in that** the evaluation device (25) is connected to at least the temperature sensor (19) and is designed for the output of a temperature signal or of a warning signal.

14. A temperature measurement arrangement in accordance with any one of the preceding claims, **characterised in that** the temperature measurement arrangement furthermore has a radio transmitter (31) for the output of at least one sensor signal and/or of a warning signal.

15. A temperature measurement arrangement in accordance with any one of the preceding claims, **characterised in that** the temperature measurement arrangement additionally has a reference temperature sensor (35) outside the hollow space (17) in which the temperature sensor (19) is arranged.

## Revendications

1. Agencement de mesure de température pour meuble réfrigérant, comprenant un boîtier (10) qui est refermé au moyen d'au moins une fenêtre de pénétration de lumière (13), le boîtier et la fenêtre de pénétration de lumière délimitant une cavité (17) dans laquelle est agencé un capteur de température (19),
**caractérisé en ce que** l'agencement de mesure de température comprend en outre un capteur de lumière (19a) pour estimer l'influence du rayonnement thermique attaquant l'agencement de mesure de température,
dans lequel l'agencement de mesure de température comprend un dispositif d'évaluation (25) qui est réalisé pour calculer une valeur de température compensée vis-à-vis du rayonnement thermique, en se basant sur un signal de température du capteur de température (19) et sur un signal de lumière du capteur de lumière (19a).

2. Agencement de mesure de température selon la revendication 1,
**caractérisé en ce que** le capteur de lumière (19a) est agencé dans la cavité (17) dans laquelle est également agencé le capteur de température (19).

3. Agencement de mesure de température selon la revendication 2,
**caractérisé en ce que** le capteur de lumière (19a) est agencé dans la cavité (17) de telle manière que le capteur de lumière (19a) est attaqué par la lumière environnante qui tombe dans la cavité (17) à travers la fenêtre de pénétration de lumière (13).

4. Agencement de mesure de température selon l'une des revendications précédentes,
**caractérisé en ce que** le capteur de lumière (19a) est une cellule solaire ou une photodiode.

5. Agencement de mesure de température selon l'une des revendications précédentes,
**caractérisé en ce que** le boîtier (11) est réalisé de manière à absorber la lumière sur son côté intérieur.

6. Agencement de mesure de température selon l'une des revendications précédentes,
**caractérisé en ce que** la fenêtre de pénétration de lumière (13) s'étend le long de la face supérieure (15) et/ou le long de la face antérieure (39) et/ou le long d'au moins une paroi latérale (41) du boîtier (11), et cela au moins par tronçons.

7. Agencement de mesure de température selon l'une des revendications précédentes,
**caractérisé en ce que** la fenêtre de pénétration de lumière (13) est transparente pour la lumière visible et pour les rayonnements ultraviolets.

8. Agencement de mesure de température selon l'une des revendications précédentes,
**caractérisé en ce que** le capteur de température (19) est agencé dans la cavité (17) à distance de la fenêtre de pénétration de lumière (13).

9. Agencement de mesure de température selon l'une des revendications précédentes,
**caractérisé en ce que** le capteur de température (19) est agencé dans la cavité (17) de telle façon que le capteur de température (19) est atteint par la lumière environnante qui tombe dans la cavité (13) à travers la fenêtre de pénétration de lumière (13).

10. Agencement de mesure de température selon l'une des revendications précédentes,
**caractérisé en ce que** le capteur de température (19) est relié au boîtier (11) via un moyen de fixation (20) à isolation thermique.

11. Agencement de mesure de température selon l'une des revendications précédentes,
**caractérisé en ce que** la cavité (17) dans laquelle est agencé le capteur de température (19) est refermée de manière essentiellement étanche à l'air.

12. Agencement de mesure de température selon l'une des revendications précédentes,
**caractérisé en ce que** la cavité (17) dans laquelle est agencé le capteur de température (19) est refermée de manière étanche aux gaz et est remplie d'un gaz protecteur.

13. Agencement de mesure de température selon l'une des revendications précédentes,
**caractérisé en ce que** le dispositif d'évaluation (25) est relié au moins au capteur de température (19) et est réalisé pour délivrer un signal de température ou un signal d'avertissement.

14. Agencement de mesure de température selon l'une des revendications précédentes,
**caractérisé en ce que** l'agencement de mesure de température comprend en outre un émetteur radio (31) pour délivrer au moins un signal de capteur et/ou un signal d'avertissement.

15. Agencement de mesure de température selon l'une des revendications précédentes,
**caractérisé en ce que** l'agencement de mesure de température comprend additionnellement un capteur de température de référence (35) à l'extérieur de la cavité (17) dans laquelle est agencé le capteur de température (19).
